# EUROPEAN PATENT SPECIFICATION

(11) **EP 3 503 438 B1**
(45) Date of publication and mention of the grant of the patent: **11.03.2020**
(21) Application number: 17210276.6
(22) Date of filing: 22.12.2017
(51) Int. Cl.: H04B 17/00

(54) **TEST ARRANGEMENT AND TEST METHOD**
TESTANORDNUNG UND TESTVERFAHREN
AGENCEMENT ET PROCÉDÉ D'ESSAI

(43) Date of publication of application: 26.06.2019
(73) Proprietor: Rohde & Schwarz GmbH & Co. KG, 81671 München (DE)
(72) Inventor: Sterzbach, Bernhard, 81541 München (DE)
(74) Representative: Isarpatent

(56) References cited:
- EP-A1- 2 330 843
- WO-A1-2016/022157
- US-B1- 8 781 797

## Description

### TECHNICAL FIELD

The present invention relates to a test arrangement. The present invention further relates to a test method.

### BACKGROUND

WO 2016/022157 A1 discloses a virtualization of natural radio environments to test radio devices. In one example, this is done by extracting signals and messages recorded in the field and injecting them in the operation of a protocol tester. In another example, the radio environment is reproduced by generating channel impulse responses in a ray-tracer, then interpolating them in a channel emulator and supporting the interpolation by means of post-processing. In another example, the radio environment is recorded using a mobile terminal in the field. In another example, natural radio environments are produced by reconstructing realistic cell loads and, as a consequence, intra-cell interference for a given device under test.

US8781797 B1 discloses a channel emulator that reads a record of captured radio signal data of a group of cellular base stations in a fielded cellular network from a memory. Based on the record of the captured radio signal data, the channel emulator generates a simulation of a radio environment of the fielded cellular network.

EP 2330843 A1 discloses an apparatus for providing a control signal for a transceiver of a mobile communication network. The apparatus comprises a means for simulating the mobile communication network in accordance with a predetermined simulation setting, the mobile communication network having a plurality of virtual transceivers.

Although applicable in principal to any wireless test system, the present invention and its underlying problem will be hereinafter described in combination with testing of a wireless communication device.

Mobile devices such as wireless communication devices usually are operated under real-world conditions. In some cases a user may observe a particular behavior of the communication device. If a further analysis of this observed behavior is required, the mobile device itself or a corresponding mobile device may be further tested in laboratory. For this purpose, network and radio simulation equipment may be used, and the equipment has to be adjusted until it elects a similar behavior of the device.

To reproduce the observed behavior of the device, the simulation equipment has to be set up very precisely in such a way that the simulation environment comes as close as possible to the real-world conditions.

However, since the conditions in a laboratory usually are limited, matching the real-world conditions for testing the device is a big challenge. For example, even an experienced user may require a long period of time and huge number of tasks for setting up the test scenario.

Against this background, the problem addressed by the present invention is to provide a simple test equipment for testing a device under circumstances coming as close as possible to a desired scenario.

### SUMMARY

The invention is defined by the appended independent claims. Dependent claims constitute embodiments of the invention. Any other subject-matter falling outside the scope of the claims is to be regarded as an example not in accordance with the invention.

The present invention is based on the fact that a testing of a mobile device such as a wireless communication device requires precise testing conditions. In particular, for reproducing a particular behavior of the device, it may be necessary to precisely reproduce the conditions in which the behavior has been detected. However, producing such a condition by a simulator in a laboratory is a big challenge. Accordingly, the present invention tries to reproduce a measurement environment which comes rather close to conditions in which a particular behavior of device has been observed. For this purpose, the present invention makes use of logging data e.g. a log file which has been acquired during a particular behavior of the device. Based on the acquired logging data, an automated set up and adjustment of a test environment can be performed. In particular, the test environment may be adapted in such a manner that the device under test is operated in a condition which causes the device under test to output logging data which are the same or at least similar to the logging data output by a device when observing a particular behavior. In this way, it can be ensured that the test environment comes rather close to the real-world conditions in which a particular behavior has been observed.

The device under test may be any kind of communication device. For instance, the device under test may be a user equipment, e.g. a mobile phone, a smartphone, a communication module of a computer device or any other mobile communication device. The device under test may be also any other device for mobile communication, for instance a base station, a NodeB, a radio access network or at least a component thereof. Moreover, any other communication device, in particular any other device for wireless communication may be possible, too.

The logging data provided by the acquisition device may be any kind of data specifying information about a state, an operation or a behavior of the device. For example, the logging data may specify a signal strength of an upload signal or a download signal, an error rate of a signal, a data rate or a bit rate of the signal, a data throughput, etc. Moreover, any other parameter specifying one or more properties of the device may be also possible. Further, the logging data may specify an operational mode of the device, e.g. an encryption mode or a compression mode, an established connection to another device, e.g. an established wireless or wired communication link, a measure for a load of a processor, in particular usage of one or more CPU, utilization of a memory of the device, temperature of the device, a cooling mode of the device, a state of a power supply, power consumption, or any other information relating to the device.

Furthermore, the logging data may specify any of the properties, in particular any radio frequency property in connection with the device or environment of the device. For example, the logging data may specify fading effects on an uplink or downlink channel, a jitter, a delay of a signal, e.g. due to reflections of multipass transmissions, a detuning of a frequency, e.g. due to a Doppler effect, a drop or loss of data, etc. It is understood, that the logging data are not limited to the above mentioned parameters or operation modes. Moreover, any other information may be also provided as a logging data.

The logging data of the acquisition device may be stored in a memory of the acquisition device. In this case, the logging data may be read out and provided to the test arrangement. However, any other kind for recording the logging data may be also possible. For instance, the logging data may be recorded in any kind of local memory, such as a nonvolatile memory, e.g. a flash memory, a solid state drive or hard disk drive. Further, it may be possible to transmit the logging data to another device by a wireless or wired communication link and to store the logging data in memory of the other device. However, any other recording of the logging data may be also possible.

Furthermore, the logging data may also comprise information relating to a particular behavior of the acquisition device. For instance, the logging data may describe a initialization of a handover procedure, a report of the transmission of a particular message, for instance the logging compliant message, or any kind of a faulty behavior of the acquisition device. Especially, information relating to a faulty behavior may be of great interest, since such a faulty behavior has to be further examined in order to identify the reason for the fault.

When performing a test of the device under test in the test arrangement, a network and radio channel simulator may emit test signals to the device under test. Additionally or alternatively, the network and radio channel simulator may measure signals emitted by the device under test. In particular, the network and radio channel simulator may emit and measure wireless signals. For this purpose, the network and radio channel simulator may comprise a signal generator for generating radio-frequency signals. For this purpose, the network and radio channel simulator may comprise components such as frequency generator, mixers, amplifiers, analog to digital converters, modulators and demodulators etc. In particular, the network and radio channel simulator generate any kind of signals which can be provided to the device under test. For example the network and radio channel simulator may generate signals for a wireless communication with the device under test. Furthermore, the network and radio channel simulator may also generate interfering signals which may cause interferences with the device under test. In this way, it may be possible to generate a radio-frequency environment for testing the interference resistance of the device under test.

The generated signals may be forwarded to a number of one or more antennas or antenna systems. The antennas may emit the signals generated by the network and radio channel simulator towards the device under test. Depending on the test conditions, the orientation or the configuration of the antenna or the antenna system may be adapted.

The antenna or antenna system may also receive wireless signals from the device under test. The received signals may be forwarded to the network and radio channel simulator. Based on the received signals, the network and radio channel simulator may generate a response to the received signals. Accordingly, the network and radio channel simulator may output further signals in response to the received signals. For example, a communication between the device under test and the network and radio channel simulator may be established, a handover from one base station to another base station may be simulated or any other communication operation may be performed.

Even though the above described operations are only described in conjunction with a wireless communication, it may be also possible that the connection between the network and radio channel simulator may also comprise a wired connection between the device under test and the network and radio channel simulator. Accordingly, at least some signals may be also provided to the device under test by a wired connection.

When testing the device under test, it will be of great interest to reproduce the circumstances which lead to a particular behavior of the acquisition device in real-world conditions. For this purpose, the network and radio channel simulator should be operated in such a way that the operation of the device under test comes rather close to the operation of the acquisition device when producing the logging data. This can be achieved by comparing the reference logging data of the acquisition device with the current logging data provided by the device under test. If the current logging data of the device under test correspond to the reference logging data of the acquisition device or at least comes close to the reference logging data, the simulation of the network and radio channel simulator may fit the conditions for testing the device under test. Otherwise, if there is a difference - at least a significant difference greater than a predetermined threshold - between the reference logging data and the current logging data provided by the device under test, the setting of the network and radio channel simulator is adapted in response to this difference between the logging data of the device under test and the reference logging data.

It is for this purpose that the controller may compare the reference logging data of the acquisition device with the current logging data of the device under test. Based on the result of this comparison, the controller may determine an amended setting for the network and radio channel simulator. For example, if a signal strength for an uplink and downlink channel in the reference logging data does not match the corresponding signal strength specified in the logging data of the device under test, the controller may control the network and radio channel simulator for adapting the signal strength. Accordingly, if an error rate, a data throughput, etc. of a data stream does not match a respective value in the reference logging data of the acquisition device, the network and radio channel simulator may be also adapted in order to fit the desired parameters.

Furthermore, if an initialization of the handover is detected in the reference logging data of the acquisition device, the controller may also control the network and radio channel simulator in a manner to perform such a handover procedure. If the controller detects, for instance, confirmation for a particular operation, e.g. a logging compliant message, the controller may also initiate a respective operation in the network and radio channel simulator. Accordingly, if there is an indication for an interference in the reference logging data, the controller may also set up the network and radio channel simulator to reproduce such interference of the device under test. It is understood, that the control of the network and radio channels simulator is not limited to the above-described operations. Moreover, any other setup of the network and radio channel simulator may be also performed in order to operate the network in radio channel simulator in a manner that the device under test may be operated in a way that the device under test outputs logging data corresponding to the reference logging data of the acquisition device. In this way, the device under test can be operated in operation mode which comes very close to the operation mode of the acquisition device.

The controller may comprise hardware elements, like e.g. a processing unit. However, the controller may also be software implemented at least in part. For this purpose, instructions may be stored in a memory that is coupled to a general purpose processor, e.g. via a memory bus. The processor may further execute an operating system that loads and executes the instructions. The processor may e.g. be an Intel processor that runs a Windows or Linux operating system that loads and executes the instructions. In another embodiment, the processor may be a processor of a measurement device that may e.g. run an embedded operating system that loads and executes the instructions.

Further embodiments of the present invention will be described in the following description, referring to the drawings.

In the present invention, the controller of the test arrangement is adapted to minimize a difference between a predetermined characteristic/value in the reference logging data and the test logging data.

Accordingly, it is possible to bring the operation of the device under test close to the operational mode of the acquisition device at a point of time when the reference logging data are acquired. Hence, the measurement environment for testing the device under test is that very similar to the operational conditions of the acquisition device at the moment when the reference logging data acquired. Accordingly, it is possible to operate the device under test in almost the same conditions. This makes it possible to reproduce the conditions and the operational mode of the device under test in order to analyze the behavior of the device under test in a configuration which is very similar to the real world conditions when operating the acquisition device.

In a possible embodiment, the controller of the test arrangement is adapted to control the network and radio channel simulator in real time based on the received test logging data.

Accordingly, the controller may receive further logging data from the device under test in real time and immediately compute an appropriate setting for the network and radio channel simulator. In this way, any modification of the radio environment and change of the operation of the device under test can be immediately analyzed and the setting of the network and radio channel simulator can be adapted accordingly. Thus, it is possible to determine a response of the device under test caused by a modification of the setup of the network and radio channel simulator. In this way, it is possible to collect information about the operational properties of the device under test. This information may be used for a further determination of the set up parameters for the device under test.

In a possible embodiment, the reference logging data which are provided by the acquisition device comprise a log file of the acquisition device.

Log files are usually provided by many devices in a normal operation mode. Accordingly, log files are available for many devices, even without any modification of the acquisition device. Since log files are provided during the normal operation of the device, these log files may be read out at a later point of time in order to extract information about the operation mode at the behavior of the respective device. Hence, log files may be used for analyzing the circumstances of a particular event. Log files may comprise, for instance a report about parameters of the acquisition device, e.g. a signal strength, a frequency or frequency band, a data rate, an error rate, a data throughput etc. Furthermore, the log file may also comprise information about events or operations, e.g. a handover procedure, establishing a communication channel, a successful handshake procedure, etc. However, is understood that the information in the log file is not limited to the above-mentioned features. Moreover, any other feature may be also specified in a log file of the device.

In a possible embodiment, the controller of the network and radio channel simulator comprises a parser. The parser may be adapted to parse the reference logging data stored in the reference memory. The parser may be further adapted to identify a number of predetermined parameters and/or a predetermined operational behavior of the acquisition device.

By parsing the logging data, any desired information can be easily identified. For example, it may be possible to detect predetermined keywords in the logging data and the related parameters in conjunction with these keywords. For example, a parser may search for an expression like "uplink signal strength" and identifying a value nearby this expression. However, it is understood, that any appropriate keyword may be used for identify a desired parameter, a particular operational mode or a behavior of the respective device. Moreover, it may be also possible to analyze a number of more than one successive expressions in the logging data in order to assess a behavior of the respective device. Furthermore, any other scheme for analyzing the logging data in order to identify information relating to the operation of the respective device may be also possible.

In a possible embodiment, the predetermined parameters may comprise at least one of signal strength of a signal, a bit error rate or a rate of a data throughput. However, it is understood that any other logging data defined in the logging data may be also identified and analyzed.

In a possible embodiment, the predetermined operational behavior of the acquisition device may comprise at least one of sending or receiving a system message, initiating a predetermined operation, or reporting a faulty behavior. However, any other operation mode or behavior of the device may be also identified by analyzing the logging data.

In a possible embodiment, the network and radio channel simulator may be adapted to simulate a number of user equipment, base stations, NodeB and/or a Radio Access Network. Accordingly, it is possible to simulate an appropriate test environment for a device under test, in particular for a communication device. In particular, it may be possible that the network and radio channel simulator may simulate a number of one or more components of a wireless communication environment. For example, the network and radio channel simulator may simulate multiple base stations in order to simulate a transition/handover from one base station to another. Further, it may be possible to simulate multiple user equipment, e.g. mobile phones, in order to analyze interferences or coexistence with these devices. However, it is understood, that the network and radio channel simulator is not limited to the above-mentioned properties. Moreover, the network and radio channel simulator may also simulate any other appropriate device, in particular any other appropriate communication device. Furthermore, it may be also possible that the network and radio channel simulator may simulate other devices which may have an impact to the device under test or the radio-frequency environment of the device under test.

In a possible embodiment, the reference logging data stored in the reference memory may be provided from an acquisition device which corresponds to the device under test.

When acquiring the reference logging data from an acquisition device which corresponds to the device under test, the properties of the acquisition device and the device under test are almost the same. In this way, the operational behavior of the device under test in the test environment may be similar to the behavior of the acquisition device under real-world conditions. Accordingly, it may be possible to reproduce the behavior of the acquisition device by means of the device under test in the test arrangement. For example, the acquisition device and device under test may have an identical structure. Moreover, if software is used for operating the acquisition device/the device under test, the same release of the software may be used for both devices, i.e. the device under test may be operated with the same software which has been implemented in the acquisition device when acquiring the reference logging data.

Moreover, it may be even possible that the acquisition device which has been provided to reference logging data may be the same device which is used as device under test. Accordingly, the same a device which has provided the reference logging data under real-world conditions may be used under laboratory conditions in the test arrangement. However, depending on the requirements of the test condition, it may be also possible to use a device under test which may be only similar or even different from the acquisition device.

In a possible embodiment, the controller of the network and radio channel simulator may be adapted to control the network and radio channel simulator based on prestored rules.

For example, an additional operation memory may be used for storing predefined rules, parameters, sequences, etc. In particular, it may be possible to specify a correlation between properties in the reference logging data and required settings of the network and radio channel simulator. In this way, it may be easily possible to determine an appropriate setting of the network and radio channel simulator for achieving a behavior of the device under test which comes closer to the behavior of the acquisition device for producing the reference logging data. However, it is understood, that the setting of the network and radio channel simulator is not limited to use of predetermined settings. Moreover, it may be also possible to perform any further processing, for instance an interpolation for determining appropriate setup parameters of the network and radio channel simulator. Furthermore, it may be also possible to adjust the setting of the network and radio channel simulator during the measurement procedure in order to match the operation of the device under test in such a way that the logging data provided by the device under test comes close to the reference logging data.

In a possible embodiment, the controller of the network and radio channel simulator may be adapted to control the network and radio channel simulator based on an adaptive control scheme.

For example, the controller may iteratively adapt one or more settings of the network and radio channel simulator in such a manner that the logging data output by the device under test comes close to the reference logging data provided by the acquisition device. Accordingly, it may be possible to set up the measurement conditions in the test arrangement in such a way, that the device under test may be operated under conditions which come close to the real-world conditions of the acquisition device when acquiring a reference logging data. For example, a self-learning algorithm may be used for calculating appropriate setup parameters of the network and radio channel simulator. However, it is understood, that any other scheme for adapting the setting of the network and radio channel simulator may be used.

In a possible embodiment, the test arrangement may comprise a measurement chamber that may accommodate the network and radio channel simulator and the device under test.

The measurement chamber may comprise a shielding or protective housing that isolates the test arrangement from any outside interference or disturbance during the measurements. It is understood that the measurement chamber may e.g. also comprise a door or sealable opening for accessing the insides of the measurement chamber, e.g. to place the device under test in the measurement chamber.

In a possible embodiment, the measurement chamber may comprise an anechoic chamber.

An anechoic chamber is a measurement chamber that is designed to completely absorb reflections of electromagnetic waves. The interior surfaces of the anechoic chamber may be covered with radiation absorbent material, RAM. RAM is designed and shaped to absorb incident RF radiation as effectively as possible. Measurements in electromagnetic compatibility and antenna radiation patterns require that signals arising from the test setup, like e.g. reflections, are negligible to avoid the risk of causing measurement errors and ambiguities.

With the anechoic chamber the quality of the measurements performed with the test arrangement may therefore be increased.

Especially for smaller devices like e.g. mobile phones, a small anechoic chamber may be sufficient to perform conformance tests because the radiating surface may be relatively small.

With the present invention it is therefore now possible to provide a test environment for testing a device under test with measurement conditions which come close to real-world conditions when detecting a particular behavior of a device. By automatically adapting the measurement conditions to conditions which cause the reaction of the device under test which comes close to a behavior of a device under real-world conditions, the measurement process can be adapted very precisely. Furthermore, the measurement conditions can be adapted to the required conditions in very short period of time.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schemetic figures of the drawings, in which:
- Fig. 1: shows a block diagram of an embodiment of a test arrangement according to the present invention;
- Fig. 2: shows a flow diagram of an embodiment of a test method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

### DETAILED DESCRIPTION OF THE DRAWINGS

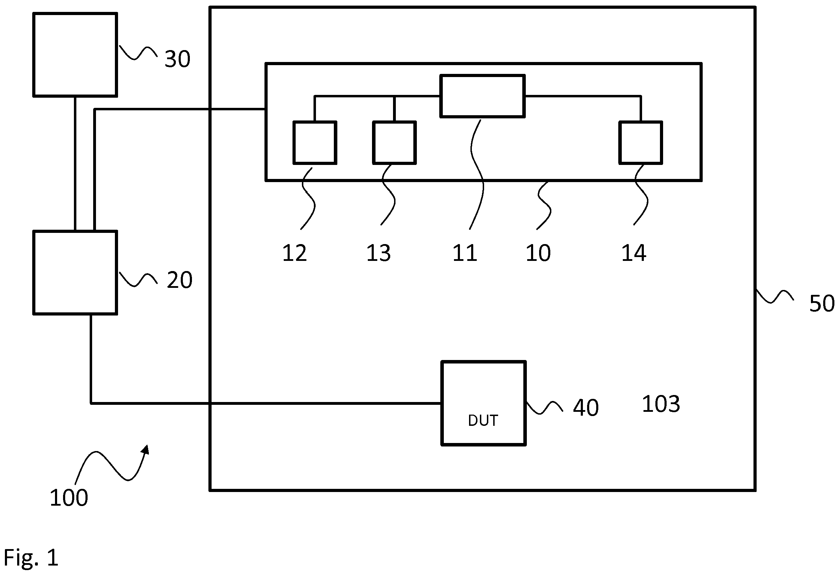

Fig. 1 shows a block diagram of an embodiment of a test arrangement 100. The test arrangement 100 comprises a network and radio channel simulator 10, a controller 20 and a reference memory 30. For example, the network and radio channel simulator 10 may simulate a desired radio-frequency environment for testing a device under test 40. The device under test 40 may be, for instance, a user equipment, e.g. a mobile phone, a communication module of computing device or any other mobile communication device. The device under test 40 may also be a base station, or at least part of base station, a NodeB device, or at least a part of a radio access network. However, the device under test 40 of the present invention is not limited to the above mentioned components. Moreover, any other device under test 40, in particular any kind of communication device, especially any kind of mobile communication device may be also possible.

For testing the device under test 40, network and radio channel simulator 10 provides a predetermined measurement environment. For example, the network and radio channel simulator 10 may establish one or more communication channels with the device under test 40. Furthermore, network and radio channel simulator 10 may emit any kind of signal, in particular any kind of radio frequency signal for communication with the device under test 40 and/or for interfering the device under test 40. For this purpose, network and radio channel simulator 10 may comprise at least one signal generator 11 and a number of one or more antennas 12, 13, 14. It is understood, that each antenna 12, 13, 14 may comprise a single antenna element or antenna system consisting of multiple antenna elements. Furthermore, the network and radio channel simulator is not limited to a number of three antennas 12, 13, 14. Moreover, any number of antenna or antenna elements may be also possible.

The operation of the network and radio channel simulator 10 may be controlled by controller 20. For example, controller 20 may be communicatively coupled with the network and radio channel simulator 10. In particular, the controller may send instructions to the network and radio simulator 10 for setting up the network and radio channel simulator 10 or for instructing the network and radio generator 10 to emit predetermined signals.

Further, network and radio channels simulator 10 may receive signals emitted by the device under test 40. In this case, network and radio channel simulator 10 may analyze the measured signals and process a response based on the received signals. For example, a communication link between the network and radio channel simulator 10 and the device under test 40 may be established. This communication channel may be used for an exchange of information between the network and radio channel simulator 10 and the device under test 40. For example, the communication channel may be established using a predetermined data rate, a coding scheme, an encryption mode, a desired signal strengths for the uplink/downlink channel, etc. Furthermore, network and radio channel simulator 10 may also simulator a transition of a communication channel between the device under test 40 and a first communication partner to a second communication partner, wherein the first and the second communication partner are simulated by the network and radio channel simulator 10. However, it is understood, that the network and radio channel simulator 10 may also simulator any other operations of communication partners for the device under test 40. Furthermore, network and radio channel simulator 10 may also simulate additional radio frequency interferences for interfering the device under test 40.

For example, network and radio channel simulator 10 may generate a radio frequency condition comprising interferences which may cause a particular error rate in a communication between the device under test 40 and a communication partner simulated by the network and radio channel simulator 10. Moreover, any other simulation of communications or interferences with the device under test 40 may be also simulated by the network and radio channel simulator 10.

The test arrangement 100 may further comprise an anechoic chamber 50. The anechoic chamber 50 comprises absorbing elements. The absorbing elements absorb or deflect the wireless signal and therefore prevent reflections of wireless signal. The anechoic chamber 50 may e.g. comprise an opening or a door that allows inserting and removing the device under test 40.

To reproduce a test environment which comes close to real-world conditions, controller 20 may control the operation of the network and radio channel simulator 10 accordingly. For this purpose, controller 20 may control the operation of the network and radio channel simulator 10 in such a way that the device under test 40 operates almost similar to a desired condition under normal circumstances in a free field under real-world conditions.

To achieve such an effect, controller 20 may refer to reference logging data provided by a device under normal operating conditions in real-world scenario. This reference logging data may be obtained, for instance the by reading out a log file of a device which is operated in a real-world scenario. For example, the device may continuously write particular information about the operation of the device in a file. This file may be written, for instance in a non-volatile memory, for example a flash memory, a solid state drive or hard disk drive. However, any other procedure for storing the data in a memory may be also possible. For example, it may be also possible that the respective data may be transferred via a wired or wireless communication link to another device for storing the respective data.

The logging data which are written in such a log file may be written continuously during the operation of the respective device. For example, the device may write data periodically. Furthermore, it may be also possible that the device may write all or at least some data upon a particular event occurs. It may be also possible that the respective parameters may be stored based on an internal or external trigger event. It is understood, that any scheme for storing the parameters of the device may be possible.

The parameters which are recorded may comprise any kind of relevant information regarding the respective device. For example, the parameters may comprise a signal strength of an uplink or downlink channel, a direction of the received or emitted signal, a data throughput through a communication channel, an error rate of transmitted data signal, information relating a coding or compression scheme, a jitter, a delay of a signal, detune of a frequency of a signal, drop of data, or any other parameters relating to the device. Further, it may be possible to store any other kind of information in association with the operation of the device. For example, it may be also possible to store an error message, information about a faulty behavior of the device, e.g. a buffer overflow, an error which occurs during performing a particular operation, etc. Furthermore, it may be also possible to log operations like initiating a handover procedure, sending or confirming a control message, etc. The logging data may also comprise any kind of other information, for example a temperature of the device, load of a CPU or a memory of the device, environmental conditions of the device or any other kind of information.

The device which is used for providing all the above-mentioned reference logging data may be similar to the device under test. In particular the type of the device for providing the reference logging data may be the same as that the type of the device under test 40. Especially, it may be even possible that the reference logging data may be provided by the device under test 40 previously under real-world conditions.

The reference logging data which have been acquired in advance may be stored in reference memory 30. Controller 20 may read out the logging data from reference memory 30 and set up the network and radio channel simulator 10 based on the information extracted from the reference logging data. In this way, the network and radio channel simulator 10 is set up in such a manner that the device under test 40 may output logging data which come close to the reference logging the data stored reference memory 30. If controller 20 detects the difference between the logging data outputted by the device under test 40 and the reference logging data stored in reference memory 30, controller 20 may adapt network and radio channel simulator 10 accordingly. In this way, controller 20 may iteratively adapt the operation of network and radio channel simulator 10 until the logging data output by the device under test 40 corresponds to the reference logging data stored in reference memory 30. For example, controller 20 may adapt the control of network and radio channel simulator 10 until the difference between the logging data output by the device under test 40 and the reference logging data stored in reference memory 30 is less than a predetermined threshold.

Controller 20 may analyze the reference logging data stored in reference memory 30 in order to identify a number of one or more relevant information. For example, it may be possible to specify one or more relevant parameters, operations or a behavior of the device which should be taken into account during a test procedure. In this case, controller 20 may identify the respective information in the reference logging data of reference memory 30. For example, controller 20 may search in the reference logging data for one or more predetermined keywords. Such a keyword may be, for instance, "signal strength", "error rate", "bitrate", or any other predetermined keyword. If such a keyword is found in the reference logging data of reference memory 30, controller 20 may identify a value in association with this keyword. Accordingly, network and radio channel simulator 10 may be controlled in such a manner that the device under test 40 may output logging data having a same or at least a similar value. For example, signal strength of a signal output by network and radio channel simulator 10 may set up to a value which causes the device under test 40 to output logging data specifying the respective value to be the same as the value in the reference logging data.

Furthermore, if a particular operation or a particular behavior of the device is identified in the reference logging data in reference memory 30, controller 20 may operate the network and radio channel simulator 10 in such a manner that the device under test 40 also performs an operation to provide logging data being the same as the reference logging data. For example, controller 20 may operate the network and radio channel simulator 10 to cause the device under test 40 to perform a handover procedure form one base station to another, wherein the two base stations are simulated by the network and radio channel simulator 10. Furthermore, if controller 20 identifies a confirmation of a particular operation in the reference logging data, controller 20 may also control the network and radio channel simulator 10 to operate in such a manner that the respective operation is performed by the device under test 40. However, it is understood, that the operation of the network and radio channel simulator 10 which is controlled by controller 20 is not limited to the above-described operations. Furthermore, a detune of a frequency for an uplink or downlink may be applied e.g. to simulate a Doppler shift, a jitter or a delay may be applied, e.g. to simulate reflections or multi-path reception, or a drop of data may be applied. Moreover, controller 20 may control the operation of the network and radio channel simulator 10 in such a manner that all features which can be identified in the reference logging data of reference memory 30 may be achieved by the device under test 40.

In order to achieve the respective output of logging data from device under test 40, it may be possible to specify rules, parameters or operational scripts to achieve a desired response of the device under test 40. For example, the rules, parameters, scripts, etc. may be stored in a memory of the controller 20. In particular, it may be possible to store correlations between a desired entry in the reference logging data and the corresponding setting of the network and radio channel simulator 10. In this way, it is possible to read out the respective setting from the memory and control the network and radio channel simulator 10 accordingly. In this way, a very fast and efficient automated set up of the test arrangement 100 can be achieved.

The operation of the network and radio channel simulator 10 may be adapted iteratively under the control of controller 20. For example, if device under test 40 reports a signal strength which is higher than the signal strength specified in the reference logging data, controller 20 may cause network and radio channel simulator 10 to reduce the strength of the respective signal until the conditions for the signal strengths are met. However, the adaptive control of the network and radio channel simulator 10 is not limited to the control of the signal strengths. It is understood that any other setting may be also dynamically adapted. In particular, it may be possible to apply any kind of self-learning algorithm in order to achieve a test environment which causes the device under test 40 to operate in such a manner that the device under test 40 outputs logging data corresponding to the respective reference logging data stored in reference memory 30. For example, controller 20 may analyze the logging data output from device under test 40 in order to identify a change of the logging data in response to a change of the setting of network and radio channel simulator 10. In this way, the controller 20 may learn how the behavior of the device under test 40 changes in response to the respective configuration and operation of the network and radio channel simulator 10.

The controller 20 may comprise a memory that stores first instructions. The first instructions may then be loaded from the memory and executed by a processor. The first instructions may cause the processor to perform the above mentioned operations of the controller 20. Accordingly, network and radio channel simulator 10 may also comprise a memory that stores second instructions. The second instructions may then be loaded from the memory and executed by a processor. The second instructions may cause the processor to perform the above mentioned operations of the network and radio channel simulator 10.

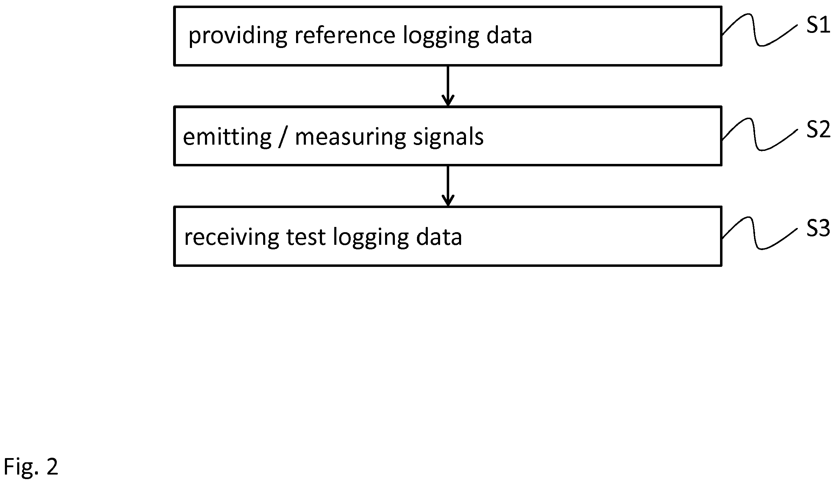

For sake of clarity in the following description of the method based Fig. 2 the reference signs used above in the description of apparatus based Fig. 1 will be maintained.

Fig. 2 shows a flow diagram of a test method for testing a device under test 40. The test method comprises a step S1 of providing reference logging data from an acquisition device. The reference logging data may be acquired under predetermined conditions. In particular, the reference logging data may be acquired under real world conditions, i.e. a normal operation of the acquisition device. The method may further comprise a step S2 of emitting test signals from a network and radio channel simulator 10 to the device under test 40 and/or measuring, by the network and radio channel simulator 10, signals emitted by the device under test 40. In a step S3 the method receives test logging data from the device under test 40. In particular, the network and radio channel simulator 10 is controlled based on a comparison of the received test logging data and reference logging data stored in a reference memory 30.

The test method may further comprise a step of acquiring reference logging data from the acquisition device, and storing the acquired reference logging data in the reference memory 30.

Summarizing, the present invention relates to a test arrangement and a test method for testing a device under test. In particular, the present invention provides an automated configuration of a test scenario for the device under test which comes close to real-world conditions. For this purpose, logging data, for instance data of the log file, may be analyzed and compared to corresponding parameters data provided by the device under test in the test arrangement. Based on this comparison, a network and radio channel simulator is controlled in order to operate the device under test under such conditions that the device under test outputs parameter data corresponding to parameter data output under real-world conditions.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

In the foregoing detailed description, various features are grouped together in one or more examples or examples for the purpose of streamlining the disclosure. It is understood that the above description is intended to be illustrative, and not restrictive. Many other examples will be apparent to one skilled in the art upon reviewing the above specification. Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

### List of reference signs

- 10: network and radio channel simulator
- 20: controller
- 30: reference memory
- 40: device under test
- 50: measurement chamber

- 100: test arrangement

## Claims

1. A test arrangement (100) for testing a device under test (40), the test arrangement (100) comprising:
a reference memory (30) adapted to store reference logging data provided from an acquisition device acquired under predetermined conditions;
a network and radio channel simulator (10) adapted to emit test signals to the device under test (40) and measure signals emitted by the device under test (40) for testing a device under test (40); and
a controller (20) adapted to receive test logging data from the device under test (40), and to control the network and radio channel simulator (10) based on a comparison of the received test logging data from the device under test (40) and the reference logging data stored in the reference memory (30),
wherein the controller (20) is further adapted to minimize a difference between a predetermined parameter in the reference logging data and the test logging data.

2. The test arrangement (100) according to claim 1, wherein the controller (20) is adapted to control the network and radio channel simulator (10) in real time based on the received test logging data.

3. The test arrangement (100) according to claim 1 or 2, wherein the reference logging data comprise a log file of the acquisition device.

4. The test arrangement (100) according to any of claims 1 to 3, wherein the controller (10) comprises a parser which is adapted to parse the reference logging data stored in the reference memory (30) and to identify a number of predetermined parameters and/or predetermined operational behavior of the acquisition device.

5. The test arrangement (100) according to claim 4, wherein the predetermined parameters comprise at least one of signal strength of a signal, bit error rate or a rate of a data throughput.

6. The test arrangement (100) according to claim 4, wherein the predetermined operational behavior of the acquisition device comprise at least one of sending or receiving a system message, initiating a predetermined operation, or reporting a faulty behavior.

7. The test arrangement (100) according to any of claims 1 to 6, wherein the network and radio channel simulator (10) is adapted to simulate a number of user equipment, base stations, Node B and/or a Radio Access Network.

8. The test arrangement (100) according to any of claims 1 to 7, wherein the reference logging data stored in the reference memory (30) are provided from an acquisition device which corresponds to the device under test (40).

9. The test arrangement (100) according to any of claims 1 to 8, wherein the controller (20) is adapted to control the network and radio channel simulator (10) based on prestored rules.

10. The test arrangement (100) according to any of claims 1 to 8, wherein the controller (20) is adapted to control the network and radio channel simulator (10) based on an adaptive control scheme.

11. The test arrangement (100) according to any of claims 1 to 10, comprising a measurement chamber (50) that accommodates the network and radio channel simulator and the device under test (40).

12. The test arrangement of claim 11, wherein the measurement chamber (50) comprises an anechoic chamber.

13. A test method for testing a device under test (40), the test method comprising:
providing (S1) reference logging data from an acquisition device, wherein the reference logging data are acquired under predetermined conditions;
emitting (S2) test signals from a network and radio channel simulator (10) to the device under test (40) and/or measuring, by the network and radio channel simulator (10), signals emitted by the device under test (40); and
receiving (S3), by a controller (20), test logging data from the device under test (40);
wherein the network and radio channel simulator (10) is controlled by the controller (20), based on a comparison of the received test logging data and reference logging data stored in a reference memory (30) and wherein
a difference between a predetermined parameter in the reference logging data and the test logging data is minimized by the controller (20).

14. The test method according to claim 13, comprising a step of acquiring reference protocol data from the acquisition device, and storing the acquired reference logging data in the reference memory (30).

## Patentansprüche

1. Testanordnung (100) zum Testen einer zu testenden Vorrichtung (40), wobei die Testanordnung (100) Folgendes umfasst:
einen Referenzspeicher (30), der ausgelegt ist, um Referenzprotokollierungsdaten zu speichern, die von einer Erfassungsvorrichtung unter vorbestimmten Bedingungen erfasst bereitgestellt werden;
einen Netzwerk- und Funkkanalsimulator (10), der ausgelegt ist, um Testsignale an die zu testende Vorrichtung (40) auszusenden und Signale, die von der zu testenden Vorrichtung (40) ausgesandt werden, zum Testen einer zu testenden Vorrichtung (40) zu messen; und
eine Steuerung (20), die ausgelegt ist, um Testprotokollierungsdaten von der zu testenden Vorrichtung (40) zu empfangen und um den Netzwerk- und Funkkanalsimulator (10) basierend auf einem Vergleich der empfangenen Testprotokollierungsdaten von der zu testenden Vorrichtung (40) und der Referenzprotokollierungsdaten, die in dem Referenzspeicher (30) gespeichert sind, zu steuern,
wobei die Steuerung (20) ferner ausgelegt ist, um eine Differenz zwischen einem vorbestimmten Parameter in den Referenzprotokollierungsdaten und den Testprotokollierungsdaten zu minimieren.

2. Testanordnung (100) nach Anspruch 1, wobei die Steuerung (20) ausgelegt ist, um den Netzwerk- und Funkkanalsimulator (10) basierend auf den empfangenen Testprotokollierungsdaten in Echtzeit zu steuern.

3. Testanordnung (100) nach Anspruch 1 oder 2, wobei die Referenzprotokollierungsdaten eine Protokolldatei der Erfassungsvorrichtung umfassen.

4. Testanordnung (100) nach einem der Ansprüche 1 bis 3, wobei die Steuerung (10) einen Parser umfasst, der ausgelegt ist, um die Referenzprotokollierungsdaten, die in dem Referenzspeicher (30) gespeichert sind, zu analysieren und um eine Zahl von vorbestimmten Parametern und/oder ein vorbestimmtes Betriebsverhalten der Erfassungsvorrichtung zu identifizieren.

5. Testanordnung (100) nach Anspruch 4, wobei die vorbestimmten Parameter mindestens eines von einer Signalstärke eines Signals, einer Bitfehlerrate oder einer Rate eines Datendurchsatzes umfassen.

6. Testanordnung (100) nach Anspruch 4, wobei das vorbestimmte Betriebsverhalten der Erfassungsvorrichtung mindestens eines von einem Senden oder Empfangen einer Systemnachricht, Einleiten eines vorbestimmten Betriebs oder Berichten eines Fehlverhaltens umfasst.

7. Testanordnung (100) nach einem der Ansprüche 1 bis 6, wobei der Netzwerk- und Funkkanalsimulator (10) ausgelegt ist, um eine Zahl von Nutzerausrüstung, Basisstationen, Node B und/oder ein Funkzugangsnetzwerk zu simulieren.

8. Testanordnung (100) nach einem der Ansprüche 1 bis 7, wobei die Referenzprotokollierungsdaten, die in dem Referenzspeicher (30) gespeichert sind, von einer Erfassungsvorrichtung bereitgestellt werden, die der zu testenden Vorrichtung (40) entspricht.

9. Testanordnung (100) nach einem der Ansprüche 1 bis 8, wobei die Steuerung (20) ausgelegt ist, um den Netzwerk- und Funkkanalsimulator (10) basierend auf vorgespeicherten Regeln zu steuern.

10. Testanordnung (100) nach einem der Ansprüche 1 bis 8, wobei die Steuerung (20) ausgelegt ist, um den Netzwerk- und Funkkanalsimulator (10) basierend auf einem adaptiven Steuerschema zu steuern.

11. Testanordnung (100) nach einem der Ansprüche 1 bis 10, umfassend eine Messkammer (50), die den Netzwerk- und Funkkanalsimulator und die zu testende Vorrichtung (40) unterbringt.

12. Testanordnung nach Anspruch 11, wobei die Messkammer (50) einen schalltoten Raum umfasst.

13. Testverfahren zum Testen einer zu testenden Vorrichtung (40), wobei das Testverfahren Folgendes umfasst:
Bereitstellen (S1) von Referenzprotokollierungsdaten von einer Erfassungsvorrichtung, wobei die Referenzprotokollierungsdaten unter vorbestimmten Bedingungen erfasst werden;
Aussenden (S2) von Testsignalen von einem Netzwerk- und Funkkanalsimulator (10) an die zu testende Vorrichtung (40) und/oder Messen, durch den Netzwerk- und Funkkanalsimulator (10), von Signalen, die durch die zu testende Vorrichtung (40) ausgesandt werden; und
Empfangen (S3), durch eine Steuerung (20), von Testprotokollierungsdaten von der zu testenden Vorrichtung (40) ;
wobei der Netzwerk- und Funkkanalsimulator (10) durch die Steuerung (20) basierend auf einem Vergleich der empfangenen Testprotokollierungsdaten und Referenzprotokollierungsdaten, die in einem Referenzspeicher (30) gespeichert sind, gesteuert wird und wobei eine Differenz zwischen einem vorbestimmten Parameter in den Referenzprotokollierungsdaten und den Testprotokollierungsdaten durch die Steuerung (20) minimiert wird.

14. Testverfahren nach Anspruch 13, umfassend einen Schritt zum Erfassen von Referenzprotokolldaten von der Erfassungsvorrichtung und Speichern der erfassten Referenzprotokollierungsdaten in dem Referenzspeicher (30).

## Revendications

1. Agencement d'essai (100) pour évaluer un dispositif à l'essai (40), l'agencement d'essai (100) comprenant :
une mémoire de référence (30) adaptée pour stocker des données de journalisation de référence fournies à partir d'un dispositif d'acquisition acquises dans des conditions prédéterminées ;
un simulateur de canal radio et de réseau (10) adapté pour émettre des signaux d'essai au dispositif à l'essai (40) et mesurer des signaux émis par le dispositif à l'essai (40) pour évaluer un dispositif à l'essai (40) ; et
un dispositif de commande (20) adapté pour recevoir des données de journalisation d'essai en provenance du dispositif à l'essai (40), et pour commander le simulateur de canal radio et de réseau (10) d'après une comparaison des données de journalisation d'essai reçues en provenance du dispositif à l'essai (40) et les données de journalisation de référence stockées dans la mémoire de référence (30),
dans lequel le dispositif de commande (20) est en outre adapté pour minimiser une différence entre un paramètre prédéterminé dans les données de journalisation de référence et les données de journalisation d'essai.

2. Agencement d'essai (100) selon la revendication 1, dans lequel le dispositif de commande (20) est adapté pour commander le simulateur de canal radio et de réseau (10) en temps réel d'après les données de journalisation d'essai reçues.

3. Agencement d'essai (100) selon la revendication 1 ou 2, dans lequel les données de journalisation de référence comprennent un fichier journal du dispositif d'acquisition.

4. Agencement d'essai (100) selon l'une quelconque des revendications 1 à 3, dans lequel le dispositif de commande (10) comprend un analyseur syntaxique qui est adapté pour analyser syntaxiquement les données de journalisation de référence stockées dans la mémoire de référence (30) et pour identifier un nombre de paramètres prédéterminés et/ou un comportement opérationnel prédéterminé du dispositif d'acquisition.

5. Agencement d'essai (100) selon la revendication 4, dans lequel les paramètres prédéterminés comprennent au moins l'un parmi une intensité de signal d'un signal, un taux d'erreur binaire ou un débit de données.

6. Agencement d'essai (100) selon la revendication 4, dans lequel le comportement opérationnel prédéterminé du dispositif d'acquisition comprend au moins l'un parmi l'envoi ou la réception d'un message système, le lancement d'une opération prédéterminée, ou le signalement d'un comportement défectueux.

7. Agencement d'essai (100) selon l'une quelconque des revendications 1 à 6, dans lequel le simulateur de canal radio et de réseau (10) est adapté pour simuler un certain nombre d'équipements utilisateur, de stations de base, un nœud B et/ou un réseau d'accès radio.

8. Agencement d'essai (100) selon l'une quelconque des revendications 1 à 7, dans lequel les données de journalisation de référence stockées dans la mémoire de référence (30) sont fournies à partir d'un dispositif d'acquisition qui correspond au dispositif à l'essai (40).

9. Agencement d'essai (100) selon l'une quelconque des revendications 1 à 8, dans lequel le dispositif de commande (20) est adapté pour commander le simulateur de canal radio et de réseau (10) d'après des règles préstockées.

10. Agencement d'essai (100) selon l'une quelconque des revendications 1 à 8, dans lequel le dispositif de commande (20) est adapté pour commander le simulateur de canal radio et de réseau (10) d'après un schéma de commande adaptative.

11. Agencement d'essai (100) selon l'une quelconque des revendications 1 à 10, comprenant une chambre de mesure (50) qui loge le simulateur de canal radio et de réseau et le dispositif à l'essai (40).

12. Agencement d'essai selon la revendication 11, dans lequel la chambre de mesure (50) comprend une chambre anéchoïque.

13. Procédé d'essai pour évaluer un dispositif à l'essai (40), le procédé d'essai comprenant :
la fourniture (S1) de données de journalisation de référence à partir d'un dispositif d'acquisition, les données de journalisation de référence étant acquises dans des conditions prédéterminées ;
l'émission (S2) de signaux d'essai à partir d'un simulateur de canal radio et de réseau (10) au dispositif à l'essai (40) et/ou la mesure, par le simulateur de canal radio et de réseau (10), de signaux émis par le dispositif à l'essai (40) ; et
la réception (S3), par un dispositif de commande (20), de données de journalisation d'essai en provenance du dispositif à l'essai (40) ;
dans lequel le simulateur de canal radio et de réseau (10) est commandé par le dispositif de commande (20), d'après une comparaison des données de journalisation d'essai reçues et des données de journalisation de référence stockées dans une mémoire de référence (30) et dans lequel, une différence entre un paramètre prédéterminé dans les données de journalisation de référence et les données de journalisation d'essai est minimisée pour le dispositif de commande (20).

14. Procédé d'essai selon la revendication 13, comprenant une étape d'acquisition de données de protocole de référence à partir du dispositif d'acquisition, et de stockage des données de journalisation de référence acquises dans la mémoire de référence (30).
